# DEMANDE DE BREVET EUROPEEN

(11) **EP 3 002 247 A1**
(43) Date de publication de la demande: **06.04.2016**
(21) Numéro de dépôt: 15187716.4
(22) Date de dépôt: 30.09.2015
(51) Int. Cl.: B66F 9/10, B62D 51/02, B66F 9/12, B66F 9/18

(54) **ENGIN DE MANUTENTION**

(30) Priorité: 01.10.2014 FR 1459377
(71) Demandeur: DM Investissements, 38110 La Batie Montgascon (FR)
(72) Inventeur: Bel, Frédéric, 38110 La Tour du Pin (FR); Marcelli, Dominique, 38110 Saint-Didier-De-La-Tour (FR)
(74) Mandataire: Talbot, Alexandre

(57) **Abrégé**

Cet engin (1) comporte un châssis (10), une structure porteuse (11) montée sur le châssis (10), une flèche (12) mobile en translation relativement à la structure porteuse (11) suivant un axe horizontal (X'-X), et mobile en rotation relativement à la structure porteuse (11) suivant un axe vertical (Z'-Z), un bras de manipulation (13) muni de moyens de préhension de la charge (2), l'engin (1) étant remarquable en ce que le bras de manipulation (13) est monté relativement à la flèche (12) de manière à entraîner en mouvement la flèche (12) lors d'un déplacement en translation du bras de manipulation (13) dans un plan horizontal.

## Description

La présente invention a trait à un engin de manutention à fourche autoporté pour déplacer une charge stockée dans un rayonnage à palette.

Par « engin de manutention à fourche », on entend notamment un préparateur de commandes, un transpalette électrique, un gerbeur électrique ou encore un chariot frontal.

Par « autoporté », on entend que l'engin est à conducteur porté assis ou debout, ce qui diffère d'un engin à conducteur accompagnant.

Un tel engin de manutention à fourche autoporté comporte classiquement une fourche adaptée pour recevoir une palette. Un opérateur de manutention doit lever la charge stockée dans le rayonnage, puis la déplacer jusqu'à la déposer sur la palette équipant l'engin.

Pour certaines applications, la charge peut être de l'ordre de 30 kg à 90 kg. Les actions de l'opérateur de manutention sont alors très éprouvantes physiquement, tout particulièrement le levage de la charge lorsque celle-ci est située au fond du rayonnage. En effet, l'opérateur de manutention doit à la fois se baisser et exercer une force de levage importante. Ainsi, de nombreux opérateurs de manutention sont victimes de troubles musculo-squelettiques, notamment à la colonne vertébrale et aux épaules.

Face à ce problème, un engin de manutention à fourche autoporté connu de l'état de la technique, notamment du document FR 2 898 596, comporte :
- un châssis,
- une structure porteuse, de type colonne porteuse, montée sur le châssis,
- une flèche mobile en translation relativement à la structure porteuse suivant un axe horizontal, et mobile en rotation relativement à la structure porteuse suivant un axe vertical,
- un mât vertical en appui au sol et monté solidaire en translation et en rotation de la flèche, le mât formant avec la colonne porteuse et la flèche un portique,
- un bras de manipulation muni de moyens de préhension de la charge, le bras de manipulation étant monté mobile en translation et en rotation sur le mât.

Tout d'abord, l'opérateur de manutention positionne le mât sur un côté du rayonnage à palette. Pour ce faire, la flèche présente un léger débattement vertical afin de décoller légèrement le mât du sol. Puis le positionnement du mât est possible grâce aux mouvements en translation et rotation de la flèche. Lorsque le mât est positionné sur un côté du rayonnage à palette et en appui au sol, l'opérateur de manutention utilise le bras de manipulation pour déplacer la charge.

Un tel engin de l'état de la technique n'est pas entièrement satisfaisant dans la mesure où l'amplitude de mouvement du bras de manipulation dans un plan horizontal devant le rayonnage à palette est limitée par la longueur du bras de manipulation. Autrement dit, le positionnement du mât sur un côté du rayonnage à palette fige le débattement du bras de manipulation dans un plan horizontal. Lorsque le rayonnage à palette est long et/ou profond, l'opérateur de manutention doit alors positionner de nouveau le mât pour accéder aux charges stockées, ce qui est fastidieux et augmente le temps d'opération.

La présente invention vise à remédier en tout ou partie aux inconvénients précités, et concerne à cet effet un engin de manutention à fourche autoporté pour déplacer une charge stockée dans un rayonnage à palette, l'engin comportant :
- un châssis,
- une structure porteuse montée sur le châssis,
- une flèche mobile en translation relativement à la structure porteuse suivant un axe horizontal, et mobile en rotation relativement à la structure porteuse suivant un axe vertical,
- un bras de manipulation muni de moyens de préhension de la charge,

l'engin étant remarquable en ce que le bras de manipulation est monté relativement à la flèche de manière à entraîner en mouvement la flèche lors d'un déplacement en translation du bras de manipulation dans un plan horizontal.

Ainsi, un tel engin selon l'invention s'affranchit d'un mât de l'état de la technique. Le débattement du bras de manipulation dans un plan horizontal n'est désormais plus limité par la longueur du bras de manipulation. Le débattement du bras de manipulation dans un plan horizontal correspond désormais au débattement de la flèche dans un plan horizontal. Ceci est rendu possible par le fait que le bras de manipulation est monté relativement à la flèche de manière à entraîner en mouvement la flèche lors d'un déplacement en translation du bras de manipulation dans un plan horizontal.

Avantageusement, le bras de manipulation est monté à une hauteur prédéterminée fixe relativement à la flèche.

Par « prédéterminée », on entend que la hauteur fixe du bras de manipulation relativement à la flèche est déterminée de sorte que la hauteur du bras de manipulation par rapport au sol :
- est inférieure à la hauteur d'une lisse supérieure délimitant partiellement le rayonnage à palette, la lisse présentant une hauteur minimale de l'ordre de 1,20 m.
- correspond à une hauteur de coude d'un opérateur de manutention, de l'ordre de 1 m à 1,20 m afin que celui-ci puisse utiliser aisément le bras de manipulation en station debout.

Avantageusement, l'engin comporte un bras de liaison reliant le bras de manipulation à la flèche, et le bras de liaison est monté pivotant autour d'un axe vertical relativement à la flèche.

Ainsi, un tel bras de liaison autorise un déplacement du bras de manipulation autour dudit axe vertical, constituant un degré de liberté supplémentaire, et ce sans entraîner en mouvement la flèche.

Selon une forme d'exécution, le bras de liaison et le bras de manipulation forment un coude, de préférence à angle droit.

Ainsi, le coude à angle droit formé permet de stabiliser la charge, sans nécessiter la présence d'un frein, en cas d'interruption du déplacement du bras de manipulation.

Selon une caractéristique, le bras de liaison s'étend suivant une direction verticale.

Avantageusement, l'engin comporte une poignée de commande du bras de manipulation agencée à l'intersection entre le bras de liaison et le bras de manipulation.

Ainsi, une telle position de la poignée de commande permet de déplacer aisément le bras de manipulation à la fois en translation dans un plan horizontal, et en rotation autour de l'axe vertical matérialisé par le bras de liaison.

Avantageusement, le bras de manipulation s'étend suivant une direction horizontale.

Selon une forme d'exécution, la flèche est télescopique suivant l'axe horizontal.

Selon une forme d'exécution, les moyens de préhension comportent une ventouse, de préférence positionnée par une tige de manoeuvre.

Avantageusement, l'engin comporte :
- un compresseur adapté pour générer de l'air comprimé,
- un conduit reliant le compresseur à la ventouse, le conduit présentant une zone d'étranglement adaptée pour créer une dépression par effet Venturi à l'intérieur de la ventouse.

Avantageusement, l'engin comporte :
- des moyens de mesure de la pression en amont de la zone d'étranglement,
- des moyens d'avertissement sonore et/ou visuel lorsque la pression mesurée en amont de la zone d'étranglement est inférieure à une valeur prédéterminée.

Ainsi, l'opérateur de manutention est averti que la préhension de la charge peut être inopérante à cause d'une dépression insuffisante par effet Venturi à l'intérieur de la ventouse.

Selon une forme d'exécution, les moyens de préhension comportent :
- un câble de traction,
- un treuil agencé pour enrouler et dérouler le câble de traction.
- un dispositif de variation en tension du câble de traction.

D'autres caractéristiques et avantages apparaîtront dans la description qui va suivre d'un mode de réalisation d'un engin selon l'invention, donné à titre d'exemple non limitatif, en référence aux dessins annexés dans lesquels :
- les figures 1 à 4 sont des vues en perspective illustrant 4 positions d'un engin selon l'invention,
- la figure 5 est une vue schématique de côté illustrant l'utilisation d'un engin selon l'invention,
- la figure 6 est une vue partielle en perspective illustrant notamment un bras de liaison et un bras de manipulation équipant un engin selon l'invention,
- la figure 7 est une vue partielle à l'échelle agrandie de moyens de préhension équipant un engin selon l'invention,
- la figure 8 est une vue partielle à l'échelle agrandie et en transparence de moyens de préhension équipant un engin selon l'invention,
- les figures 9 et 10 sont des vues partielles en coupe de moyens de préhension équipant un engin selon l'invention.

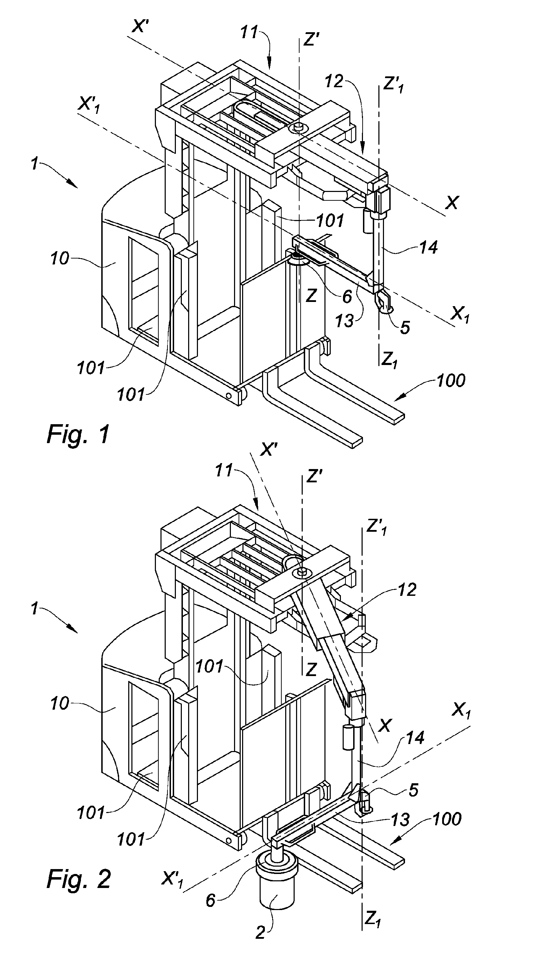

Aux figures 1 à 5 est illustré un engin 1 de manutention à fourche autoporté pour déplacer une charge 2 stockée dans un rayonnage à palette 3, l'engin 1 comportant :
- un châssis 10,
- une structure porteuse 11 montée sur le châssis 10,
- une flèche 12 mobile en translation relativement à la structure porteuse 11 suivant un axe horizontal X'-X, et mobile en rotation relativement à la structure porteuse 11 suivant un axe vertical Z'-Z,
- un bras de manipulation 13 muni de moyens de préhension de la charge 3.

Le bras de manipulation 13 est monté relativement à la flèche 12 de manière à entraîner en mouvement la flèche 12 lors d'un déplacement en translation du bras de manipulation 13 dans un plan horizontal.

Le châssis 10 est avantageusement muni d'une fourche 100 adaptée pour recevoir une palette (non représentée). Le châssis 10 est avantageusement muni de contrepoids 101 adaptés pour essentiellement contrebalancer le poids de la flèche 12, du bras de manipulation 13 et de la charge 3. Le châssis 10 est avantageusement équipé de moyens de roulage tels que des roues ou des chenillettes.

La structure porteuse 11 est avantageusement de type potence, présentant une section en forme de gamma majuscule « r ».

La flèche 12 est avantageusement télescopique suivant l'axe horizontal X'-X.

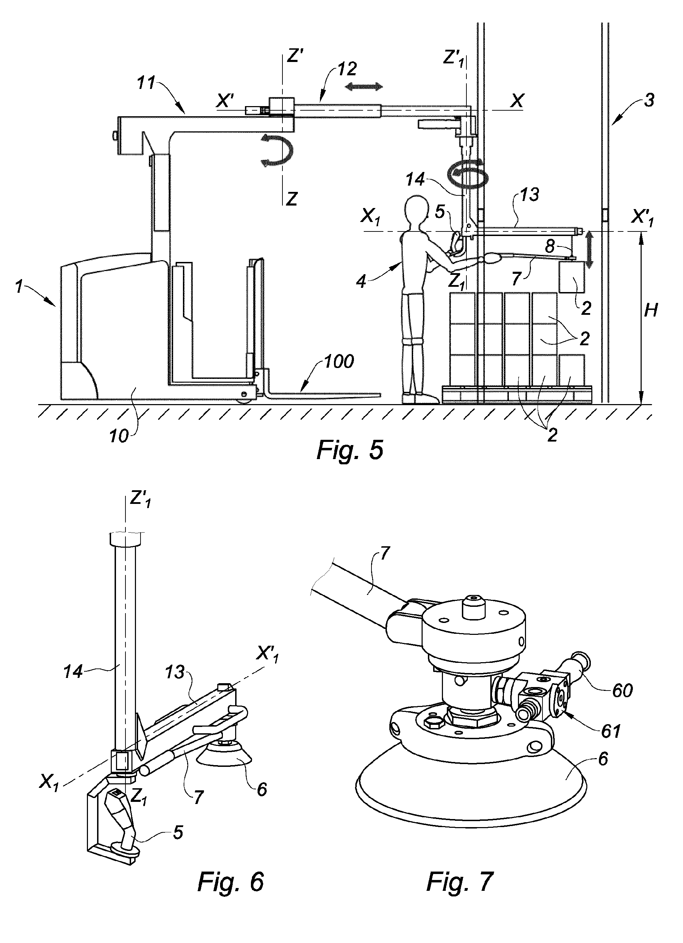

Le bras de manipulation 13 s'étend suivant une direction horizontale X'₁-X₁. Le bras de manipulation 13 est monté à une hauteur prédéterminée fixe relativement à la flèche 12. Par « prédéterminée », on entend que la hauteur fixe du bras de manipulation 13 relativement à la flèche 12 est déterminée de sorte que la hauteur H du bras de manipulation 13 par rapport au sol :
- est inférieure à la hauteur d'une lisse supérieure délimitant partiellement le rayonnage à palette 3,
- correspond à une hauteur de coude d'un opérateur de manutention 4 afin que celui-ci puisse utiliser aisément le bras de manipulation 13 en station debout (visible à la figure 5).

L'engin 1 comporte avantageusement un bras de liaison 14 reliant le bras de manipulation 13 à la flèche 12. Le bras de liaison 14 est avantageusement monté pivotant autour d'un axe vertical Z'₁-Z₁ relativement à la flèche 12. Le bras de liaison 14 est avantageusement monté solidaire en translation et en rotation de la flèche 12. Le bras de liaison 14 s'étend préférentiellement suivant une direction verticale Z'₁-Z₁. Le bras de liaison 14 et le bras de manipulation 13 forment avantageusement un coude à angle droit. Le bras de manipulation 13 est avantageusement fixé au bras de liaison 14. Il en résulte que le bras de manipulation 13 est monté relativement à la flèche 12 par l'intermédiaire du bras de liaison 14 de manière à :
- entraîner en mouvement la flèche 12 en translation suivant l'axe horizontal X'-X ou en rotation autour de l'axe vertical Z'-Z lors d'un déplacement en translation du bras de manipulation 13 dans un plan horizontal,
- ne pas entraîner en mouvement la flèche lors d'un déplacement en rotation du bras de manipulation 13 autour de l'axe vertical Z'₁-Z₁.

A la figure 1 est illustré l'engin 1 en position dite de stockage dans laquelle :
- la flèche 12 est en position de repos,
- le bras de manipulation 13 est parallèle à la flèche 12, et orienté vers le châssis 10.

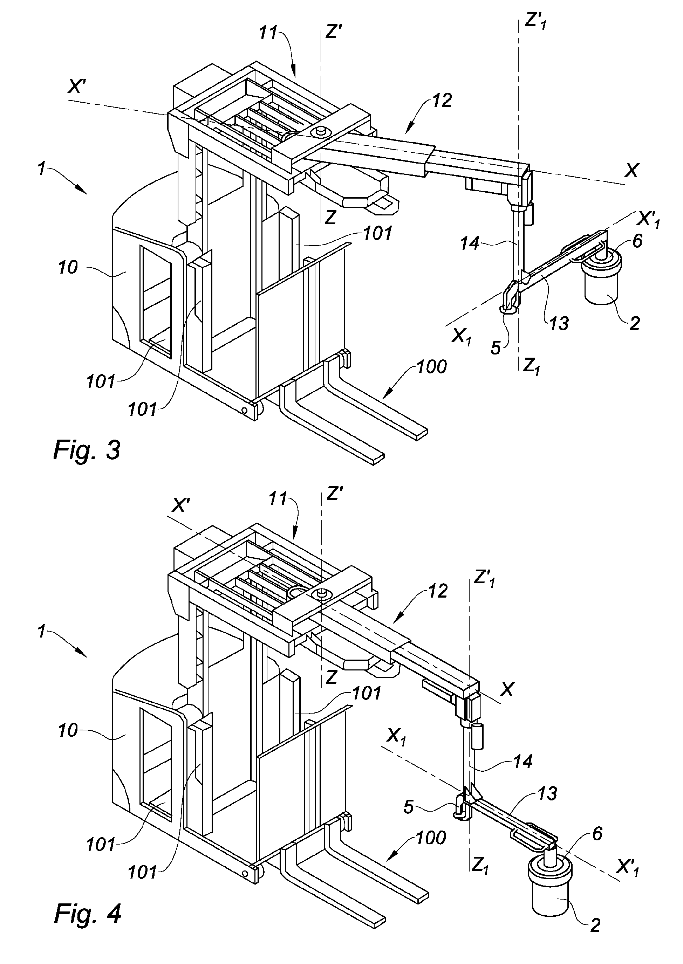

A la figure 4 est illustré l'engin 1 en position dite de sortie dans laquelle :
- la flèche 12 est entraînée en translation suivant l'axe X'-X,
- le bras de manipulation 13 est parallèle à la flèche 12, et orienté à l'opposé du châssis 10, les axes X'-X, X'₁-X₁ et Z'₁-Z₁ définissant un seul plan.

Aux figures 2 et 3 est illustré l'engin 1 en position dite latérale dans laquelle :
- la flèche 12 est entraînée en translation suivant l'axe X'-X,
- la flèche 12 est entraînée en rotation autour de l'axe Z'-Z,
- le bras de manipulation 13 est déplacé autour de l'axe Z'₁-Z₁ de manière à être orienté vers la charge 2.

L'engin 1 comporte avantageusement une poignée de commande 5 du bras de manipulation 13 agencée à l'intersection entre le bras de liaison 14 et le bras de manipulation 13. La poignée de commande 5 comporte avantageusement des moyens de commande agencés pour commander les moyens de préhension.

A titre d'exemple non limitatif, la charge 2 peut être un bidon d'une masse inférieure ou égale à 30 kg.

Les moyens de préhension comportent avantageusement une ventouse 6 adaptée pour adhérer au couvercle du bidon. La ventouse 6 et le bras de manipulation 13 sont suffisamment compacts de manière à pouvoir s'introduire dans un espacement ténu entre la lisse supérieure et un empilement de palettes sous le rayonnage à palettes 3. La ventouse 6 est de préférence positionnée par une tige de manoeuvre 7 manoeuvrée par l'opérateur de manutention 4. La tige de manoeuvre 7 est avantageusement montée mobile en rotation relativement aux moyens de préhension de manière à éviter à l'opérateur de manutention de se baisser.

A titre de variantes, la ventouse 6 peut être remplacée par une pince, un grappin ou un crochet.

L'engin 1 comporte avantageusement :
- un compresseur (non représenté) adapté pour générer de l'air comprimé,
- un conduit (non représenté seul un embout 60 est visible à la figure 7) reliant le compresseur à la ventouse, le conduit présentant une zone d'étranglement (seule une pièce 61 à l'intérieur de laquelle est ménagée la zone d'étranglement est visible à la figure 7) adaptée pour créer une dépression par effet Venturi à l'intérieur de la ventouse 6.
- des moyens de mesure de la pression en amont de la zone d'étranglement, les moyens de mesure comportant préférentiellement un pressostat,
- des moyens d'avertissement sonore et/ou visuel lorsque la pression mesurée en amont de la zone d'étranglement est inférieure à une valeur prédéterminée.

A titre d'exemple non limitatif, les moyens d'avertissement sonore et/ou visuel peuvent comporter un gyrophare.

Les moyens de préhension comportent avantageusement :
- un câble de traction 8 relié à la ventouse 6,
- un treuil 9 agencé pour enrouler et dérouler le câble de traction 8.

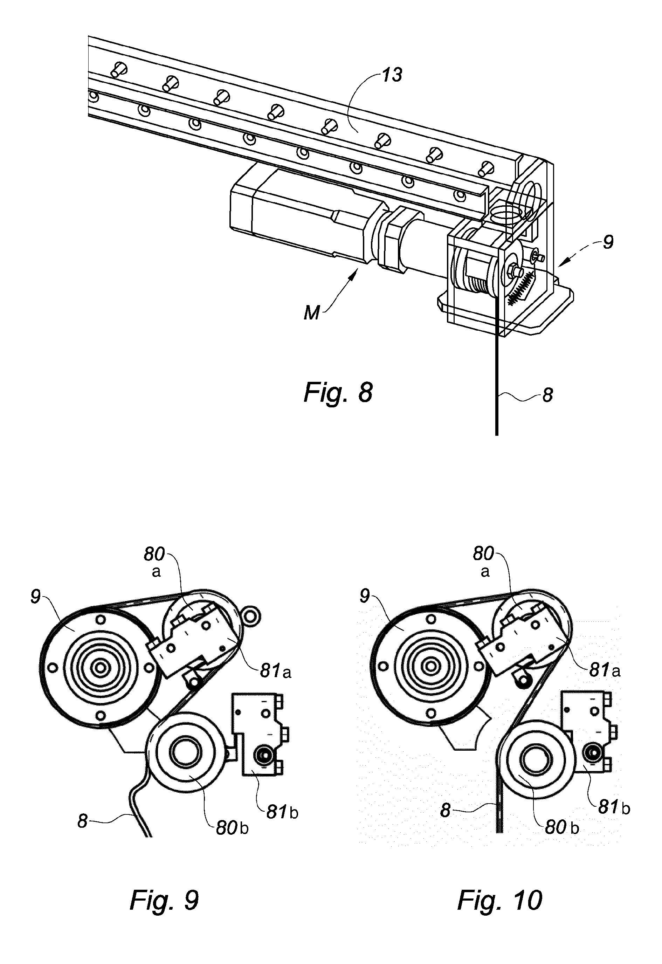

Comme visible à la figure 8, le treuil 9 est avantageusement entraîné en rotation par un moteur M.

A titre de variantes, le câble de traction 8 peut être remplacé par une chaîne ou une courroie.

Comme visible aux figures 9 et 10, les moyens de préhension comportent avantageusement un dispositif de variation en tension du câble de traction 8.

Le dispositif de variation en tension du câble de traction 8 comporte préférentiellement deux poulies de déviation 80a, 80b du câble de traction 8. Chaque poulie de déviation 80a, 80b est montée en rotation. Le dispositif comporte deux capteurs 81 a, 81 b de position agencés pour détecter la position respective des deux poulies de déviation 80a, 80b. Le dispositif est configuré pour agencer les deux poulies de déviation 80a, 80b de sorte que, lorsque le câble de traction 8 présente une tension insuffisante (illustré à la figure 9), le câble de traction 8 est mis en tension (illustré à la figure 10) afin d'éviter de donner du mou supplémentaire au câble de traction 8. Le capteur 81a permet de contrôler si le câble de traction 8 présente une tension suffisante de manière à autoriser un auto-maintien de la charge 2. Le capteur 81 b peut envoyer un signal d'arrêt du moteur M si le câble de traction 8 présente une tension insuffisante.

## Revendications

1. Engin (1) de manutention à fourche autoporté pour déplacer une charge (2) stockée dans un rayonnage à palette (3), l'engin (1) comportant :
- un châssis (10),
- une structure porteuse (11) montée sur le châssis (10),
- une flèche (12) mobile en translation relativement à la structure porteuse (11) suivant un axe horizontal (X'-X), et mobile en rotation relativement à la structure porteuse (11) suivant un axe vertical (Z'-Z),
- un bras de manipulation (13) muni de moyens de préhension de la charge (2),
l'engin (1) étant **caractérisé en ce que** le bras de manipulation (13) est monté relativement à la flèche (12) de manière à entraîner en mouvement la flèche (12) lors d'un déplacement en translation du bras de manipulation (13) dans un plan horizontal.

2. Engin (1) selon la revendication 1, **caractérisé en ce que** le bras de manipulation (13) est monté à une hauteur prédéterminée fixe relativement à la flèche (12).

3. Engin (1) selon la revendication 1 ou 2, **caractérisé en ce qu'**il comporte un bras de liaison (14) reliant le bras de manipulation (13) à la flèche (12), et **en ce que** le bras de liaison (14) est monté pivotant autour d'un axe vertical (Z'₁-Z₁) relativement à la flèche (12).

4. Engin (1) selon la revendication 3, **caractérisé en ce que** le bras de liaison (14) et le bras de manipulation (13) forment un coude, de préférence à angle droit.

5. Engin (1) selon la revendication 3 ou 4, **caractérisé en ce que** le bras de liaison (14) s'étend suivant une direction verticale (Z'₁-Z₁).

6. Engin (1) selon l'une des revendications 3 à 5, **caractérisé en ce qu'**il comporte une poignée de commande (5) du bras de manipulation (13) agencée à l'intersection entre le bras de liaison (14) et le bras de manipulation (13).

7. Engin (1) selon l'une des revendications 1 à 6, **caractérisé en ce que** le bras de manipulation (13) s'étend suivant une direction horizontale (X'₁-X₁).

8. Engin (1) selon l'une des revendications 1 à 7, **caractérisé en ce que** la flèche (12) est télescopique suivant l'axe horizontal (X'-X).

9. Engin (1) selon l'une des revendications 1 à 8, **caractérisé en ce que** les moyens de préhension comportent une ventouse (6), de préférence positionnée par une tige de manoeuvre (7).

10. Engin (1) selon la revendication 9, **caractérisé en ce qu'**il comporte :
- un compresseur adapté pour générer de l'air comprimé,
- un conduit reliant le compresseur à la ventouse, le conduit présentant une zone d'étranglement adaptée pour créer une dépression par effet Venturi à l'intérieur de la ventouse (6).

11. Engin (1) selon la revendication 10, **caractérisé en ce qu'**il comporte :
- des moyens de mesure de la pression en amont de la zone d'étranglement,
- des moyens d'avertissement sonore et/ou visuel lorsque la pression mesurée en amont de la zone d'étranglement est inférieure à une valeur prédéterminée.

12. Engin (1) selon l'une des revendications 1 à 11, **caractérisé en ce que** les moyens de préhension comportent :
- un câble de traction (8),
- un treuil (9) agencé pour enrouler et dérouler le câble de traction (8),
- un dispositif (80a, 80b, 81 a, 81 b) de variation en tension du câble de traction (8).
